# EUROPEAN PATENT APPLICATION

(11) **EP 4 752 865 A1**
(43) Date of publication of application: **03.06.2026**
(21) Application number: 25213761.7
(22) Date of filing: 05.11.2025
(51) Int. Cl.: G09B 19/24, G09B 23/28

(54) **SYSTEM FOR TRAINING PERSONNEL IN CHARGE OF RADIOLOGICAL ACTIVITIES**

(30) Priority: 29.11.2024 IT 202400004992 U
(71) Applicant: Simad S.r.l., 40066 Pieve di Cento (BO) (IT)
(72) Inventor: FALLAVENA, Franco, 40066 Pieve di Cento (BO) (IT)
(74) Representative: Gregorj S.r.l.

(57) **Abstract**

The present invention refers to a system (1) for training personnel in charge of interventional-radiological activities. The system (1) comprises:
- an apparatus (2) simulating a radiological-type apparatus, preferably the apparatus (2) having at least one "C-shaped" operative portion (8),
- a dummy (5) adapted to simulate a patient,
- a simulating operating table (3) provided with an abutment plane (4), the table (3) being configured to support the dummy (5),

At least one between the apparatus (2) and dummy (5) comprises at least one light source (6, 7) configured to:
- simulate different types of radiological emission, and
- emit light radiation according to different frequencies.

## Description

### Technical field of the invention

The present invention refers to a training system in the field of the radiological protection.

More particularly, the invention refers to a system for training personnel in charge of radiological activities, in particular, interventional-radiological activities.

### Prior art

Apparatuses for radiological activities are known. Some of them show an operative portion provided with a "C-shaped" arch.

Personal Protective Equipment (PPE) is known, i.e. personal devices used in order to reduce the exposition of operators (specialized personnel) which perform activities by apparatuses emitting ionizing radiations, such as X rays.

It is known that the radiations emitted in operative conditions from the apparatuses for radiological activities give rise to risks, not only to the patient, but also to the personnel in charge of radiological activities.

In view of the incorrect use of a PPE, the Applicant has observed the necessity of a system for training personnel in charge of radiological activities.

### Objects of the invention

Therefore, an object of the present invention consists of providing a training instrument adapted to train the personnel in charge of radiological activities with reference to the risks, particularly the risks related to ionizing radiations, caused by an incorrect use of the personal protective equipment and/or of the medical apparatus/device ("C-shaped" arch) itself.

In other words, the invention contemplates training the personnel in charge of radiological activities with reference to said risks, so that the personnel can correctly and consciously operate.

Therefore, the invention contemplates minimizing or eliminating said risks during the use of radiological-type apparatuses, by acting in advance by training the personnel.

These and other objects are met by a system for training personnel in charge of radiological or interventional-radiological activities according to the following description, the attached claims, and the following aspects.

### Summary

The invention refers to a system for training personnel in charge of radiological activities, particularly interventional-radiological activities.

The advantageous characteristics of the systems are indicated in the attached claims and in the following numbered aspects.
1. System (1) for training personnel in charge of radiological activities, particularly interventional-radiological activities, the system (1) comprising:
   - an apparatus (2) simulating a radiological-type apparatus, the simulated radiological apparatus being provided with at least one radiological or radiogenic source, preferably the apparatus (2) having at least one portion (8), particularly an operative portion, that is "C-shaped",
   - a dummy (5) or an analogous component adapted to simulate a patient,
   - a simulating operating support (3), particularly a simulating operating table, provided with an abutment plane (4), the support (3) being configured to support the dummy (5) or the analogous component,
   wherein at least one between the apparatus (2) and the dummy (5) or analogous component comprises at least one light source (6, 7) configured to:
   - simulate different types of radiological emission of the radiological or radiogenic source, and
   - emit light radiation according to different frequencies,
   the system (1) being configured to simulate, by said at least one light source (6, 7) and the dummy (5) or analogous component, the interaction between said radiological or radiogenic source and the patient.
2. System according to aspect 1, wherein both the apparatus (2) and the dummy (5) or analogous component comprise at least one respective light source (6, 7).
3. System according to aspect 1 or 2, wherein the or each light source (6, 7) is configured to irradiate the light radiation in order to span an angular interval at least equal to 150°, particularly at least equal to 180°.
4. System according to aspect 1 or 2 or 3, wherein the or each light source (6, 7) is configured to irradiate light radiation in a plurality of directions.
5. System according to anyone of the preceding aspects, wherein the apparatus (2) has a portion (8), particularly an operative portion, that is "C-shaped", the light source (6) of the apparatus being placed at or in proximity of one of the ends of the "C-shaped" portion (8).
6. System according to anyone of the preceding aspects, further comprising a controller (21), for example a control unit and/or a software and/or a computer program, configured to:
   - simulate different types of radiological emission, and
   - control different frequencies and/or intensities, preferably both frequencies and intensities, of the light sources emitted from the, or from each, light source (6, 7).
7. System according to aspect 6, wherein:
   - both the apparatus (2) and the dummy (5) or analogous component comprise at least a respective light source (6, 7),
   - the controller (21) is configured to control both the light source or light sources (7) of the dummy (5) or analogous component and the light source or light sources (6) of the apparatus (2).
8. System according to aspect 7, comprising a single controller (21) configured to control all the light sources (6, 7) of the system (1).
9. System according to aspect 6 or 7 or 8, wherein the controller (21) is configured to simulate different types of radiological irradiation in terms of frequency of the irradiation at one or more of the following frequencies, particularly all of them: 0.5, 1, 2, 4, 6, 12, 25 fps,
   preferably the controller (21) being also configured to simulate, by a single light pulse, a single radiological pulse.
10. System according to anyone of the preceding aspects, wherein the system (1) is not configured to generate any radiological emission.
11. System according to anyone of the preceding aspects, wherein neither the apparatus (2) nor the dummy (5) or analogous component are configured to perform any radiological emission.
12. System according to anyone of the preceding aspects, wherein the or each light source (6, 7) emits light by laser.
13. System according to anyone of the preceding aspects, wherein the support (3) is at least partially transparent and/or configured to aid the vision of light radiations emitted from the light source or light sources (6) of the apparatus (2).
14. System according to anyone of the preceding aspects, wherein the apparatus (2) is devised, and only destined, to be used for training personnel in the field of the radioprotection.
15. System according to anyone of the preceding aspects, wherein the dummy (5) or analogous component comprises a plurality of light sources (7).
16. System according to aspect 15, wherein the dummy (5) or analogous component comprises at least seven light sources (7), preferably at least nine light sources (7).
17. System according to aspect 15 or 16, wherein the light sources (7) are inserted at an upper and/or abdominal portion of the dummy (5) or analogous component, particularly at an angle of 45°.
18. System according to aspect 15 or 16 or 17, wherein the light sources (7) of the dummy (5) or analogous component are in the shape of light inserts (7).
19. System according to anyone of aspects from 15 to 18, wherein the light sources (7) of the dummy (5) or analogous component are distributed on an upper portion of the dummy (5) or analogous component, particularly on an abdominal portion of the dummy (5) or analogous component.
20. System according to anyone of aspects from 15 to 19, wherein the light sources (7) are distributed on the dummy (5) or analogous component in so as to enable to distribute the light emissions in a plurality of directions and/or so as to simulate the scattering of the emissions of the radiological or radiogenic source.
21. System according to anyone of aspects from 15 to 20, wherein the light sources (7) are distributed on the dummy (5) or analogous component according to a circumferential distribution or pattern.
22. System according to anyone of the preceding aspects, comprising at least one screen (10, 10') configured to enable and/or display the centering or positioning of the apparatus (2) on the dummy (5) or analogous component in order to simulate the centering or positioning of the radiological apparatus on the patient,
   preferably wherein said at least one screen (10, 10') is operatively connected to the controller (21).
23. System according to anyone of the preceding aspects, wherein the simulating operating support (3) is transparent to the light radiations, particularly at least at the abutment plane (4).
24. System according to anyone of the preceding aspects, further comprising an image detector (9) configured to display the relative positioning between the apparatus (2) and the dummy (5) or analogous component and/or configured to simulate the detection of images of the radiological apparatus, preferably the apparatus (2) comprising said image detector (9).
25. Method of operating a system for training personnel in charge of radiological activities, particularly interventional-radiological activities, the method comprising the following steps:
   - predisposing a system (1) according to any one of the preceding aspects and/or any one of the attached claims,
   - simulating different types of radiological emission, and/or
   - emitting light radiation according to different frequencies by at least one light source (6, 7).
26. Method according to aspect 25, the light emission step taking place by the one or more light sources (6) of the apparatus (2) and the one or more light sources (7) of the dummy (5) or of an analogous component.
27. Method according to aspect 25 or 26, the method comprising:
   - simulating different types of radiological emission of the radiological or radiogenic source, and/or
   - controlling different frequencies and/or intensities of the light radiations emitted from the light source or from each light source.
28. Method according to aspect 25 or 26 or 27, wherein said step of simulating different types of radiological emission and/or said control step can be performed by a controller (21).
29. Method according to aspect 28, wherein the controller (21) is or comprises a control unit and/or a software and/or a computer program.
30. Method according to aspect 28 or 29, wherein the controller (21) is part of the apparatus (2) or of the system (1).
31. Method according to aspect 29 or 30 or 31, wherein the controller (21) is operative on the apparatus (2) and/or on the system (1).
32. Method according to aspect 31, wherein the controller (21) is operative remotely on the apparatus (2) and/or on the system (1).
33. Use of the system in accordance with any of aspects from 1 to 24 and/or to any of the system claims for training personnel, in particular for training personnel in the field of radiation protection.

Further, the present disclosure regards the use of the system, according to one or more of the attached claims and/or according to the preceding numbered aspects and/or according to the following description, for training personnel, particularly for training personnel in the radio-protection field. Still more particularly, the system can be used in a personnel training course without using ionizing radiation sources, which would expose the trained/to be trained personnel and the teachers to useless and damaging radiological exposures.

Moreover, the present disclosure regards a method of operating the system, according to one or more of the attached claims and/or according to the preceding numbered aspects and/or to the following description, comprising the following steps:
- predisposing a system according to one or more of the attached claims and/or according to the preceding numbered aspects and/or to the following description,
- simulating different types of radiological emission and/or
- emitting light radiation according to different frequencies by at least one light source.

Preferably, the light emission can be generated by the one or more light sources of the apparatus and the one or more light sources of the dummy or of an analogous component.

The method can comprise:
- simulating different types of radiological emission of the radiological or radiogenic source, and/or
- controlling different frequencies and/or intensities of the light radiations emitted from the light source or from each light source.

Said step of simulating different types of radiological emission and/or said control step can be performed by a controller. The controller can be or can comprise a control unit and/or a software and/or a computer program.

The controller can be part of the apparatus or system and/or can be operative on the apparatus and/or system, for example remotely.

The technical characteristics which will be described in the following with reference to the functions of the system can be applied in the field of corresponding uses of the system, such as the hereinbefore indicated ones or steps of said method.

### Conventions and definitions

In the context of the present disclosure, one or more of the following definitions and conventions can be applied, when necessary and except where differently indicated and/or except where the context excludes them:
- "apparatus simulating a radiological-type apparatus" means an apparatus destined to simulate an apparatus of the radiological type (or radiological apparatus), but operatively different from this latter because it is provided of light radiation emissions (emitted from one or more light sources) as a substitute to radiological emissions (emitted from at least one or more radiological or radiogenic sources of the simulated radiological apparatus);
- in other words, the apparatus according to the invention is provided with one or more light sources, while the radiological-type apparatus has one or more radiation sources destined to be used for a medical/therapeutic/diagnostic use;
- the apparatus according to the invention is structurally similar to the radiological-type apparatus which is made to simulate;
- the apparatus according to the invention is configurated to simulate the radiological scattering and pulsed fluoroscopy;
- the "scattering" is the phenomenon by which the rays, when hitting a surface or an obstacle, are subjected to a deviation from the original path, so that they will irradiate a larger area;
- the "pulsed fluoroscopy" is a technique which enables, as a function of the number of the emitted pulses, to reduce the radiological emission, because it is discontinuous;
- "light source" means a source configured to simulate, by a light emission (emission at the visible wavelengths), the radiological emission of a radiological emission source (non-visible X-rays), in order to make visible this latter;
- "radiology" means "medical radiology";
- "radiological" or similar terms mean pertaining to the medical radiology;
- particularly, "radiological activity" means "an activity which implies or includes the emission of ionizing radiations, such as X rays";
- "simulating operating table or support" means a support or table simulating an operating support or table;
- the "system for training personnel in charge of radiological activities" is destined to simulate a medical device (in other words, the radiological-type apparatus); this system according to the invention, which is indicated in the following by the reference number 1, is not a medical device, in the same way the apparatus which that is indicated in the following by the reference number 2 is not a medical device.

### Brief description of the drawings

In order to better comprehend the invention and appreciate the advantages thereof, some embodiments thereof will be described in the following in an exemplifying and non-limiting way with reference to the attached figures, wherein:
Figure 1 illustrates an apparatus (also simply a "C-shaped" arch), the operative portion thereof being shaped as a "C" (i.e. "C-shaped"), simulating a radiological-type apparatus. Such apparatus is part of the system for training personnel in charge of radiological activities according to the invention;
Figure 2 illustrates a simulating operating table provided with an abutment plane. Such simulating operating table is part of the system for training personnel in charge of radiological activities according to the invention and is configured to cooperate with the apparatus of Figure 1;
Figure 3 illustrates a dummy adapted to simulate a patient. This dummy is part of the system for training personnel in charge of the radiological activities according to the invention and is configured to be supported by the table of Figure 2 and to cooperate with the apparatus of Figure 1;
Figure 4 illustrates the system for training personnel in charge of radiological activities according to the invention, in use; the system comprises the apparatus of Figure 1, the simulating operating table of Figure 2 and the dummy of Figure 3. Figure 4 shows the personnel during a training session in the field of radioprotection.

### Detailed description of the embodiments of the invention

### System for training personnel in charge of radiological activities

A system according to the invention is generally indicated in the figures by reference number 1.

The system 1 is configured to enable to train the personnel in charge of radiological activities, particularly interventional-radiological activities.

The system 1 comprises:
- an apparatus 2 simulating a radiological-type apparatus, the simulated radiological apparatus being provided with at least one radiological or radiogenic source,
- a simulating operating support 3, particularly a simulating operating table, provided with an abutment plane 4,
- preferably, a dummy 5 or an analogous component adapted to simulate a patient and particularly the interaction between the radiological or radiogenic source and the patient.

Therefore, it is observed that system 1 is configured to simulate, by at least one light source 6, 7 and the dummy 5 or analogous component, the interaction between the radiological or radiogenic source and the patient, the interaction being in condition of use of the simulated radiological apparatus.

With reference to the simulation of the interaction between the radiological source and the patient, it is noted that the dummy 5 serves to help to understand the scattering: the simulated X ray, by passing through the human body, is deviated, so that it will irradiate a greater area than the cone generated by the radiological or radiogenic source simulated by light sources.

The simulating operating table 3, unlike the operating table which cooperates with the simulating radiological-type apparatus, is transparent to the light radiations (preferably, it is made of plexiglass), in order to promote the diffusion of the emitted light radiation. On the contrary, the "conventional" operating table is provided with a radiolucent plane, so that it will not reduce the radiation or create shadows in the radiological image such to interfere with the work of the surgeon or doctor or other personnel involved.

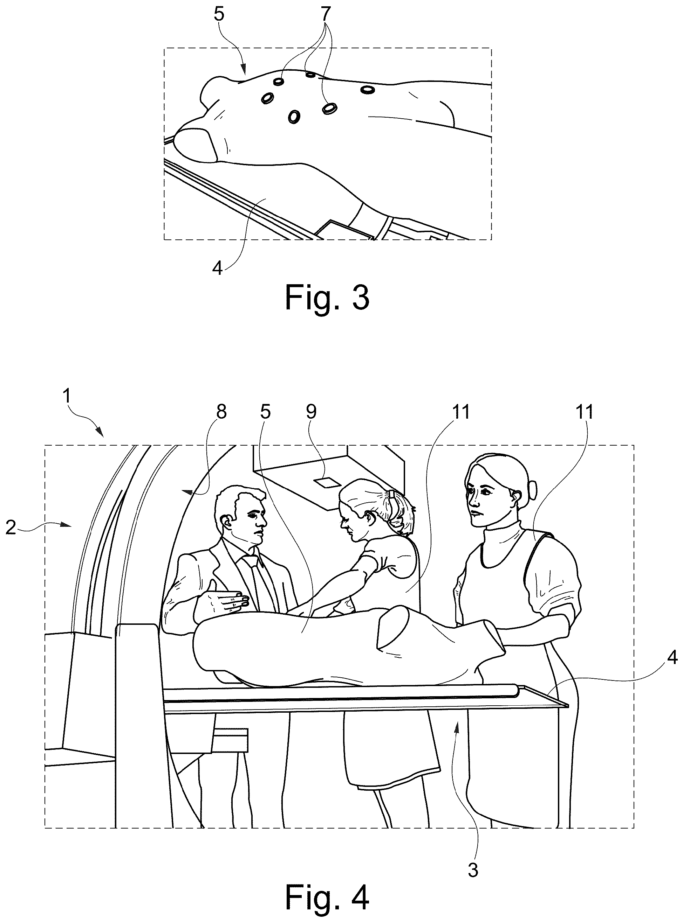

The dummy 5 can simulate a patient at least with reference to the physical shape of a determined portion of the patient body, such as the torso or thorax; for this matter see Figure 3.

Preferably, the support 3 is configured to support the dummy 5 on the abutment plane 4.

The system 1 according to the invention, provides that at least one between the apparatus 2 and the dummy 5 comprises at least one light source 6, 7 configured to:
- simulate different types of radiological emission, and
- emit light radiation at different frequencies.

The apparatus 2 is almost structurally equal (with reference to the external aspect, size, etcetera) to the radiological-type apparatus which simulates; the main difference is that the apparatus 2 comprises at least one light source 6, 7, while the radiological-type apparatus comprises a radiogenic source; a further difference consists of an image detector, which is indicated in the following by number 9.

More particularly, according to the invention, both the apparatus 2 and the dummy 5 comprise at least a respective light source 6, 7.

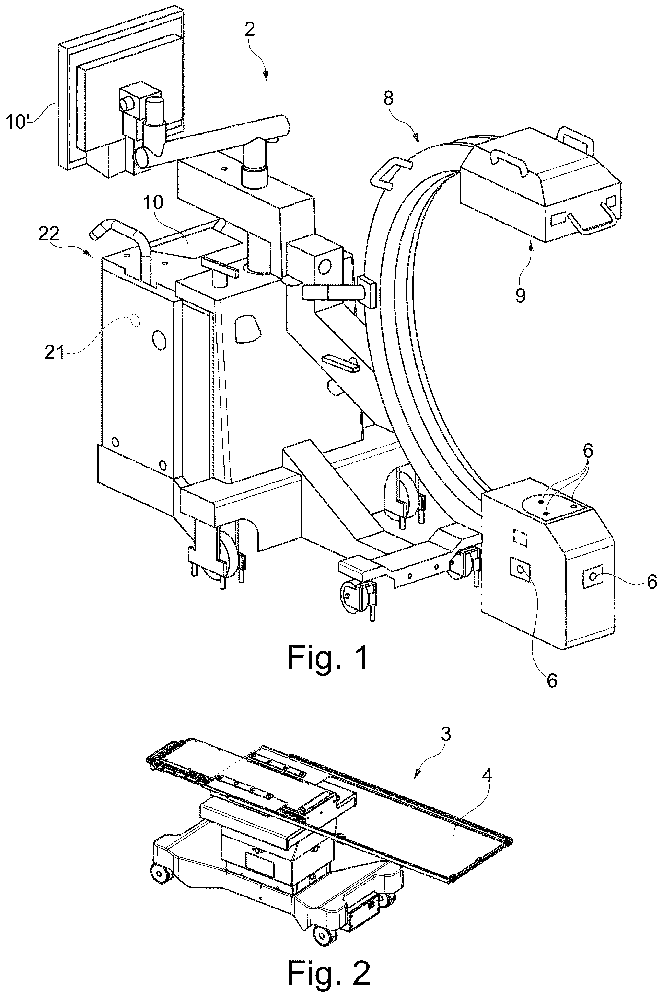

The light sources 6 of the apparatus 2 are visible in Figure 1; besides the light sources indicated by reference 6, there is another one placed in the opposite side (this side is not shown) to the side of which a source light 6 is hatched.

The dummy 5 can be provided with a plurality of light sources 7, in the shape of light inserts (see Figure 3), enabling to amplify the light irradiation, and ensuring in this way a better comprehension of the diffusion of the X-type diffused beam (the beam diffused from the radiological apparatus in use).

It is observed that each light source 6, 7 is preferably configured to irradiate light radiation in order to cover an angular range at least equal to 150°, particularly at least equal to 180°. Such an angular range is defined around the light source, on all the sides (just imagine a half sphere having its center at the light source).

Substantially, each light source 6, 7 is configured to irradiate the light radiation towards a plurality of directions.

As it is shown in Figure 1, the apparatus 2 can be provided with a "C-shaped" operative portion 8. The operative portion 8 defines a free space inside which, under operative conditions, the support 3 and the dummy 5 are positioned (see Figure 4). The free space is defined inside the "C-shaped" operative portion 8; in this regard, see Figure 1. The light source 6 of the apparatus 2 is placed at or is in proximity of one of the ends of the "C"; with reference to Figure 1, the light source 6 of the apparatus is placed at the end of the "C" located in the bottom portion of Figure 1. At the other end of the "C", it can be provided an image detector 9, destined to simulate the X ray image detector of the radiological apparatus. The system 1 image detector 9 according to the invention, which is part of the apparatus 2, can be a camera enabling to display the relative position between the apparatus 2 and the dummy 5 and the light emissions, "simulating" the image which could be obtained by the radiological apparatus.

According to the invention, the system 1 comprises a controller 21. In Figure 1, the controller 21 is shown as integrated in a command console 22 of the apparatus 2. Preferably, the controller 21 is placed or installed inside the apparatus 2.

The controller 21 can be in the shape of, or can comprise, a control unit and/or a software and/or a computer program. The control unit can be placed inside the apparatus 2; with reference to the software and computer program, it is noted that these ones can be stored in the apparatus 2.

The controller 21 is configured to:
- simulate different types of radiological emission, and
- control different frequencies and/or intensities, preferably both the frequencies and intensities, of the light radiations emitted from the light source or from each light source.

With reference to the simulation, the controller 21 is configured to simulate the different types of irradiation emitted from common radiological apparatuses, by using the light sources 6, 7, particularly laser diode illuminators. More particularly, the controller 21 is configured to simulate such different types of irradiation from common radiological apparatuses in terms of irradiation frequency, for example: 0.5, 1, 2, 4, 6, 12, 25 fps (frames-per-second). The controller 21 can also control a single light pulse, for simulating a single X ray pulse.

In the embodiments wherein both the apparatus 2 and the dummy 5 comprise at least one respective light source 6, 7, the controller 2 is configured to control both the light source/s of the dummy and the light source/s of the apparatus 2. Particularly, the controller 21 is single (for example, a single control unit or a single software or a single computer program) and is configured to control all the light sources of the system 1, in other words both each light source 6 of the apparatus 2 and each light source 7 of the dummy 5.

The light source/s 6 of the apparatus 2 are destined to highlight the diffusion of the X-type ionizing radiations, simulating them, emitted from the radiological-type apparatus with reference to the surrounding environment and therefore the involved personnel.

The apparatus 2 and the dummy 5 can be provided with the same system for turning on/off the light sources 6, 7. The system for turning on/off the light sources 6, 7 is provided by the controller 21, particularly by the software.

The light sources 7 of the dummy 5 are destined to highlight the diffusion of the X-type ionizing radiation through the patient body, simulating them, with reference to the surrounding environment and therefore the involved personnel.

In the preferred embodiment, the controller 21 is a software. The signal generated by the software is translated in an electromechanical behaviour different from the native one (in other words the X ray emission) of the apparatus 2 which is simulated, which turns on the different light sources of the apparatus 2.

The system 1 according to the invention, being destined to simulate the operative conditions, is not configurated to perform any radiological emission. This characteristic enables the system 1 to perform the required forming sessions, avoiding risks to the personnel, due to radiological emissions, particularly the ionizing radiation emission.

Therefore, preferably neither the apparatus 2 nor the dummy 5 are configured to perform any radiological emissions.

It is observed that one or more light sources 6, 7, particularly all the light sources 6, 7, can emit light by laser. Particularly, one or more light sources 6, 7 can be laser diode sources (laser diode illuminators).

The simulating operating table 3 can be provided with a movement system enabling it to move in different directions.

Preferably, as hereinbefore discussed, the simulating operating table 3 is at least partially transparent (e.g.: can be made of plexiglass) and/or is configured to aid the vision of the light radiations emitted from the light source/s 6 of the apparatus 2. Such transparency characteristic or such characteristic adapted to aid the vision of the light radiations is preferably defined at least at the abutment plane 4 of the simulating operating table 3.

As illustrated in Figure 3, preferably the dummy 5 comprises a plurality of light inserts 7. At least seven light inserts 7 can be provided, preferably at least nine light inserts 7. Preferably, the light inserts 7 are placed or inserted at 45° (optimal position), on the abdominal portion of the dummy 5, in order to simulate the irradiation of 180°, considering as the reference axis the plane of the simulating operating table 3. The angle of 45° is defined between consecutive light inserts 7 with respect to the surface of the dummy 5, on the horizontal plane. As illustrated in Figure 3, the light inserts 7 can be distributed on an upper portion of the dummy 5, for example in order to form a circumference. The distribution of the light inserts 7 is destined to highlight how the scattering is made, in other words to simulate how the scattering of the emissions of the radiological or radiogenic source is made. Briefly stated, when an X ray passes through the body of the patient, it is deviated, and it exits substantially in any direction. The circumferential distribution of the light inserts 7 enables to span as much as possible, considering the limits of the size of the light inserts 7, also the sides of the dummy 5, even though they are not placed there.

The system 1 can comprise at least one screen 10, 10'. Figure 1 shows a screen 10 integrated into the command console 22 of the apparatus 2 and an additional screen 10', which is movable; both the screens 10, 10' preferably show the same screen-shot. The screen 10, 10' enables to simulate in the most adherent way, the use of the radiological apparatus, particularly the so-called "centering on the patient" by laser, in other words the positioning or centering of the radiological apparatus on the patient portion which is destined to be operated.

Preferably, each screen 10, 10' is operatively connected to the controller 21, for example to the control unit and/or the software and/or the computer program.

It is observed that the apparatus 2 is preferably devised, and only destined, to be used for training the personnel in the radioprotection field.

In Figure 4, the personnel in charge of the radiological activity (at the right in figure) wear personal protection equipment 11, while a training operator (at the right in figure) trains them.

The technical characteristics, herein disclosed with reference to functions of the device, can be applied in the field of corresponding uses of the system / device or steps of the method which will be described in the following and can be therefore used for specifying such applications and method in the attached claims.

### Possible use of the system

The use of this system enables to see the X ray scattering.

The system can be used in the field of a training course for radioprotection techniques.

### Further advantages and final observations

The system 1 according to the invention advantageously enables an optimal training, in the field of the radioprotection of the personnel in charge of radiological activities.

The system 1 according to the invention, cannot be used in a clinical environment; it simulates a medical device (the radiological apparatus) and is devoid of the risks which are typical of this latter.

The protection given by the claims extends to each element, component and/or step of the invention equivalent to the claimed one/s.

It is understood that each element, component and/or step of the product/method according to the invention, can be substituted with an equivalent component and/or step (in the following, "equivalent/s"); such equivalent/s can be already existent at the filing or priority date of the present patent text or can be devised or developed in the future.

## Claims

1. System (1) for training personnel in charge of radiological activities, particularly interventional-radiological activities, the system (1) comprising:
- an apparatus (2) simulating a radiological-type apparatus, the simulated radiological apparatus being provided with at least one radiological or radiogenic source, preferably the apparatus (2) having at least one portion (8), particularly an operative portion, that is "C-shaped",
- a dummy (5) or an analogous component adapted to simulate a patient,
- a simulating operating support (3), particularly a simulating operating table, provided with an abutment plane (4), the support (3) being configured to support the dummy (5) or the analogous component,
wherein at least one between the apparatus (2) and the dummy (5) or analogous component comprises at least one light source (6, 7) configured to:
- simulate different types of radiological emission of the radiological or radiogenic source, and
- emit light radiation according to different frequencies,
the system (1) being configured to simulate, by said at least one light source (6, 7) and the dummy (5) or analogous component, the interaction between said radiological or radiogenic source and the patient.

2. System according to claim 1, wherein both the apparatus (2) and the dummy (5) or analogous component comprise at least one respective light source (6, 7).

3. System according to claim 1 or 2, wherein the or each light source (6, 7) is configured to irradiate the light radiation in order to span an angular interval at least equal to 150°, particularly at least equal to 180°,
preferably wherein the or each light source (6, 7) is configured to irradiate light radiation in a plurality of directions.

4. System according to anyone of the preceding claims, wherein the apparatus (2) has a portion (8), particularly an operative portion, that is "C-shaped", the light source (6) of the apparatus being placed at or in proximity of one of the ends of the "C-shaped" portion (8).

5. System according to anyone of the preceding claims, further comprising a controller (21), for example a control unit and/or a software and/or a computer program, configured to:
- simulate different types of radiological emission, and
- control different frequencies and/or intensities, preferably both frequencies and intensities, of the light sources emitted from the, or from each, light source (6, 7).

6. System according to claim 5, wherein:
- both the apparatus (2) and the dummy (5) or analogous component comprise at least a respective light source (6, 7),
- the controller (21) is configured to control both the light source or light sources (7) of the dummy (5) or analogous component and the light source or light sources (6) of the apparatus (2).

7. System according to claim 6, comprising a single controller (21) configured to control all the light sources (6, 7) of the system (1).

8. System according to claim 5 or 6 or 7, wherein the controller (21) is configured to simulate different types of radiological irradiation in terms of frequency of the irradiation at one or more of the following frequencies, particularly all of them: 0.5, 1, 2, 4, 6, 12, 25 fps,
preferably the controller (21) being also configured to simulate, by a single light pulse, a single radiological pulse.

9. System according to anyone of the preceding claims, wherein the system (1) is not configured to generate any radiological emission.

10. System according to anyone of the preceding claims, wherein the apparatus (2) is devised, and only destined, to be used for training personnel in the field of the radioprotection.

11. System according to anyone of the preceding claims, wherein the dummy (5) or analogous component comprises a plurality of light sources (7).

12. System according to claim 11, wherein the light sources (7) of the dummy (5) or analogous component are in the shape of light inserts (7), and
wherein the light sources (7) are distributed on the dummy (5) or analogous component in so as to enable to distribute the light emissions in a plurality of directions and/or so as to simulate the scattering of the emissions of the radiological or radiogenic source.

13. System according to claim 11 or 12, wherein the light sources (7) are distributed on the dummy (5) or analogous component according to a circumferential distribution or pattern.

14. System according to anyone of the preceding claims, further comprising an image detector (9) configured to display the relative positioning between the apparatus (2) and the dummy (5) or analogous component and/or configured to simulate the detection of images of the radiological apparatus, preferably the apparatus (2) comprising said image detector (9).

15. Use of the system in accordance with any of claims 1 to 14 for training personnel, in particular for training personnel in the field of radiation protection.

16. Method of operating a system for training personnel in charge of radiological activities, particularly interventional-radiological activities, the method comprising the following steps:
- predisposing a system (1) according to any one of claims 1 to 14,
- simulating different types of radiological emission, and
- emitting light radiation according to different frequencies by at least one light source (6, 7),
preferably, the method comprising:
- simulating different types of radiological emission of the radiological or radiogenic source, and/or
- controlling different frequencies and/or intensities of the light radiations emitted from the light source or from each light source.
